Europäisches Patentamt

European Patent Office

Office européen des brevets

(19)

(11) Publication number: **0 136 029**
**A2**

(12) # EUROPEAN PATENT APPLICATION

(21) Application number: **84305489.1**

(22) Date of filing: **13.08.84**

(51) Int. Cl.⁴: **C 08 F 10/00**, C 08 F 2/42

(30) Priority: **01.09.83 US 528502**
**01.09.83 US 528498**

(43) Date of publication of application: **03.04.85**
**Bulletin 85/14**

(84) Designated Contracting States: **BE DE FR GB IT NL SE**

(71) Applicant: **MOBIL OIL CORPORATION, 150 East 42nd Street, New York New York 10017 (US)**

(72) Inventor: **Cook, John Edward, 603 Lawrence Avenue, Westfield New Jersey 07090 (US)**
Inventor: **Hagerty, Robert Olds, 328 Horizon Drive, Edison New Jersey 08817 (US)**
Inventor: **Jacob, Frederick William, 4029 Milton, Houston Texas 77005 (US)**

(74) Representative: **West, Alan Harry, Mobil Court 3 Clements Inn, London WC2A 2EB (GB)**

(54) Method and system for injecting a kill gas into a gas phase catalytic polymerization reactor.

(57) In a method for terminating a gas phase olefin polymerization reaction with a kill gas such as carbon monoxide or carbon dioxide, a carrier gas is used to increase the rate of penetration of kill gas into the reaction medium.

EP 0 136 029 A2

F-2411(2412)

## METHOD AND SYSTEM FOR INJECTING A KILL GAS
## INTO A GAS PHASE CATALYTIC POLYMERIZATION REACTOR

This invention relates to a method and a system for injecting a kill gas into a gas phase catalytic polymerization reactor.

U.S. Patent No. 4,326,048 describes a method for terminating a gas phase olefin polymerization by injecting a carbon oxide. The injection of carbon oxide may take place downstream of the polymerization reactor, e.g., in the recycle gas line. The gas phase olefin polymerization may take place in a stirred bed reactor or in a fluidized bed reactor as described in U.S. Patent No. 4,003,712.

U.S. Patent No. 4,306,044 describes means for introducing carbon dioxide into a gas-phase olefin polymerization system to at least reduce the rate of polymerization. For example, the carbon dioxide may be injected manually when the polymerization does not respond to other means of control, such as rapid venting of the reactor. Accordingly, U.S. Patent No. 4,306,044 suggests the introduction of carbon dioxide into a gas-phase olefin polymerization reaction while venting is taking place. U.S. Patent No. 4,306,044 also suggests that the polymerization system may be equipped with means for sensing a potentially dangerous condition and means operable by like sensing means automatically to introduce carbon dioxide into the polymerization system. For example, the sensing means may comprise a motion switch on a stirrer shaft for detecting failure of rotation of the stirrer.

The ability to rapidly reduce the rate of a polymerization reaction is important since otherwise a run-away reaction could result, thereby causing the polymer to fuse into a large mass which could only be broken up with great difficulty.

U.S. Patent No. 4,302,566 describes a fluidized bed reactor which is operated at a temperature below the sintering temperature of the polymer particles. In normal operation, the temperature of the fluidized bed is primarily controlled by passing recycle gas through a compressor and then through a heat exchanger, wherein the recycle gas is stripped of heat of reaction before it is returned to the fluidized bed. If the compressor in the fluidized bed arrangement fails, e.g., due to electrical or mechanical failure, the cooling means for controlling the temperature in the bed becomes inoperative. Since olefin reactants are still in contact with active catalyst, exothermic heat of reaction causes the temperature of the bed to climb toward sintering temperatures in a run-away fashion. This situation would warrant an emergency shut down of the reactor, and also venting of the olefins from the reactor as fast as possible in an attempt to control the run-away reaction. In this regard, it is noted that the fluidized bed system as described in U.S. Patent No. 4,302,566 is expressly provided with a venting system for shut down. However, there are practical constraints on the rate at which olefins can be vented from the reactor. More particularly, olefins cannot simply be released to the atmosphere for environmental reasons. Consequently, vented olefins are burned by passage through a flare. Accordingly, further constraints result from the fact that the rate at which olefins are vented from the reactor cannot exceed the capacity of the flare in terms of the maximum rate at which olefins can be burned. Building flares of greater capacity involves greater construction costs. Furthermore, the size of the fireball when a large flare is operating at full capacity may be prohibitive for environmental or safety reasons.

It will be appreciated that the volume of carbon oxide kill gas which is needed to terminate olefin polymerization is practically negligible in comparison with the total volume of gas in a fluid bed reactor. Furthermore, when flow of recycle gas through the reactor ceases due to compressor failure, the pressure gradient across the bed becomes essentially zero. Accordingly, if kill gas is merely injected at a point below the bed, there is essentially no pressure gradient across the bed to induce the flow of kill gas through the bed. A pressure gradient across the bed can be induced by venting gas from the top of the bed, which venting would be expected in an emergency shut down operation. However, as previously mentioned, there are practical constraints as to the rate at which olefin containing gas can be vented from the reactor. Therefore, even when kill gas injection is accompanied by venting of the reactor, the rate of penetration of kill gas to catalyst particles may be relatively slow due to practical constraints associated with the rate at which the reactor can be vented. Unless the reaction is killed rapidly, the sintering temperature of the polymer particles may be exceeded. Accordingly, there is a need in the art for faster methods of killing the olefin polymerization reaction.

According to one aspect of the invention, there is provided a method for terminating a gas phase olefin catalytic polymerization reaction, said method comprising the injection of an amount of kill gas into the reaction medium sufficient to terminate the reaction, wherein to increase the rate of penetration of kill gas into the reaction medium a non-catalyst-poisoning carrier gas is injected into the reaction medium together with said kill gas.

According to a preferred embodiment of the invention, there is provided a method for terminating a gas phase olefin catalytic polymerization reaction in a fluid bed reactor system, said reactor system comprising a vertical reactor wherein said polymerization takes place and a fluidizing medium recycle means in fluid communication with said reactor and powered by a compressor, said method being actuated in the event of failure of said compressor and comprising the steps of:

    (i)   closing off said recycle means by closing one or more valves in said recycle means;

    (ii)  injecting an amount of carbon oxide gas sufficient to terminate said polymerization, said injection taking place adjacent the bottom of said reactor at a point below the polymer bed in said reactor;

    (iii) venting gas from adjacent the top of the reactor at a point above said polymer bed; and

(iv)  injecting a non-catalyst-poisoning carrier gas into the reaction adjacent the bottom of said reactor at a point below the polymer bed in said reactor.

Alternatively, there is provided a method for terminating a gas phase olefin catalytic polymerization reaction during a power failure, said olefin polymerization reaction taking place in a reactor having a gas recycle means equipped with a compressor capable of producing a coast-down flow of recycle gas for at least one minute during a power failure, said method comprising injecting an amount of kill gas into said recycle means sufficient to terminate the olefin polymerization reaction, whereby said kill gas is carried into the reaction medium by said coast-down flow of recycle gas during said power failure.

According to yet another aspect of the invention, there is provided a fluid bed reactor system in which olefin monomers may be catalytically polymerized continuously in a fluid bed under gas medium fluidized conditions, comprising:

a vertical reactor having a cylindrical lower section, an upper section having a cross section greater than that of said lower section, said lower section being adapted to house a polymerization zone in which the catalyzed polymerization reaction may be conducted under gas medium fluidized fluid bed conditions, and said upper section being adapted to function as a velocity reduction zone for the recovery of particles entrained in fluidizing medium entering said upper section from said lower section, and fluidizing medium permeable distribution plate means within and towards the base of said lower section, said distribution plate means being adapted to diffuse fluidizing medium up through the fluidized bed in said lower section and to support said bed thereon when said bed is quiescent;

fluidizing medium supply means in gas communication with, and adapted to supply fluidizing medium and make up gas to, the lower section of said reactor and below said distribution plate means;

catalyst injection means in communication with, and adapted to supply particulate olefin polymerization catalyst to, the polymerization zone in said lower section;

polymer product recovery means in communication with, and adapted to recover polymer product from, the base of said polymerization zone and above said distribution plate means;

fluidizing medium recycle means in communication with said reactor and adapted to recover fluidizing medium from the upper section of said reactor and to recycle the thus recovered fluidizing medium to the lower section of said reactor at a point below said distribution plate means, said fluidizing medium recycle line means being powered by a compressor;

heat exchange means within said recycle means adapted to remove heat of reaction from the recycled fluidizing medium;

gas analyzer means in communication with said velocity reduction zone and adapted to analyze gas component deficiency in the fluidizing medium in said velocity reduction zone;

said fluidizing medium supply means being in communication with said recycle means and said gas analyzer means and being adapted to supply deficient components of the fluidizing medium to said recycle means in response to an activation signal from said gas analyzer means;

valve means capable of closing off said fluidizing medium recycle means when said compressor is not operating;

injection means capable of injecting carbon oxide into said reactor below said distribution plate means;

venting means for venting gas from the top of said reactor;

carrier gas injection means capable of injecting nitrogen into said reactor below said distribution plate means; and

automatic reaction kill initiating means comprising a compressor failure sensing means in operative connection with said valve means, carbon oxide injection means, said venting means and said carrier gas injection means, said kill initiating means being capable of sensing failure of said compressor and automatically actuating said valve means, said carbon oxide injection means, said venting means and said nitrogen carrier gas means, whereby said fluidizing medium recycle means is closed off, gas is vented from the top of said reactor, and carbon oxide carried by said nitrogen carrier gas is passed through said bed.

From the preceding discussion, it will be seen that the present invention seeks to provide rapid termination of polymerization in a fluid bed reactor in the event of an emergency loss of cooling gas flow from the recycle compressor. This emergency would occur, for example, from a loss of electrical power or mechanical failure of the compressor. When cooling flow is lost, the exothermic heat of reaction may cause the temperature of a polyethylene bed to rise at a rate as high as 4°C per minute. If the polyethylene is allowed to reach a temperature greater than its sticking point (approximately 95-100°C for linear low density polyethylene) the bed will fuse together into a solid mass, and will necessitate a major plant shutdown. To prevent any possibility of overheating, the fluid bed should be normally operated well below the sticking point. For example, a 10°C margin allows enough time (about 3 minutes) for an emergency kill system to operate if a cooling emergency occurs.

The present invention reduces the response time of the kill system, and consequently enables fluid bed reactor operation at higher temperatures. This gives two major process advantages. For a fixed temperature of cooling gas flow to the reactor (which has a minimum value limited by the condensation or dew point temperature) a higher bed temperature increases the differential available for heat transfer, and allows a higher production rate of resin. Alternatively, production rates may be maintained at normal levels and the dew point temperature of the cooling gas increased by adding more comonomer such as hexene. A higher comonomer concentration in the recycle gas and the reactor would allow production of lower density copolymers.

The kill gas may be any gas which is capable of poisoning the olefin polymerization catalyst to the extent of terminating the polymerization. Reversible catalyst poisons such as carbon oxides (i.e. carbon monoxide, carbon dioxide and mixtures thereof) are preferred as opposed to the less preferred irreversible catalyst poisons such as oxygen and air.  By use of reversible catalyst
poisons, it is possible to reactivate poisoned catalyst simply by
purging the reactor of these poisons.  Such purging will not
reactivate catalysts poisoned with irreversible catalyst poisons.

The olefin polymerization catalysts which are capable of
being poisoned include catalyst systems based on compounds of
transition metals.  A preferred class of such transition metal
compound containing catalysts include Ziegler-type catalysts, which
may be characterized as chemical complexes derived from a transition
metal halide (e.g., $TiCl_4$) and a metal hydride or a metal alkyl
(e.g., aluminum alkyl).

The carrier gas employed may be any gas which is essentially
catalytically inert in the sense that it is essentially incapable of
poisoning the olefin polymerization catalyst and thereby reducing the
polymerization activity thereof.  Suitable carrier gases include
reactive gases such as the olefin feed gases to the reactor (e.g.,
ethylene), and, more preferably, non-reactive gases such as argon,
helium and, especially nitrogen.

The kill gas and carrier gas are injected into the reactor in
a manner such that the kill gas is carried along with the carrier.
Accordingly, the kill gas is normally injected at the same point as
the carrier gas or slightly upstream from the carrier gas.  With
regard to injection of the kill gas and carrier gas at the same point,
it is noted that the kill gas and carrier gas may constitute a
preformed mixture.  It will be recognized that such preformed mixtures
exclude naturally occurring mixtures, such as air.

Since only a very small amount of kill gas is normally needed
to terminate the olefin polymerization, the amount of carrier gas
which is injected into the reactor may greatly exceed the amount of
kill gas which is introduced into the reactor.  More particularly, for
example, the amount of carrier gas may be at least 90 mol percent of
the total of kill gas and carrier gas.

The present process is particularly suitable for use in
fluidized bed reaction systems as described in U.S. Patent Nos.

4,003,712, 4,302,566 and 4,349,648.  However, this process may also be
used in other gas-phase reaction systems, such as stirred bed-type gas
phase reactors, described in, e.g., U.S. Patent Nos. 4,306,044 and
3,965,083.

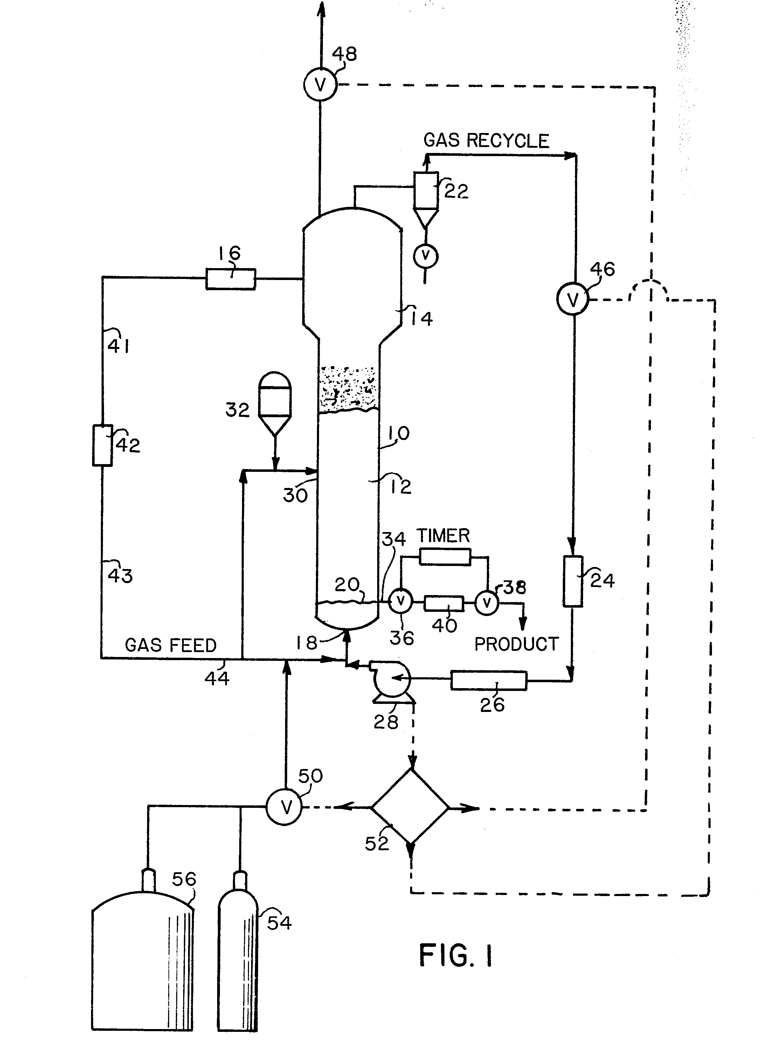

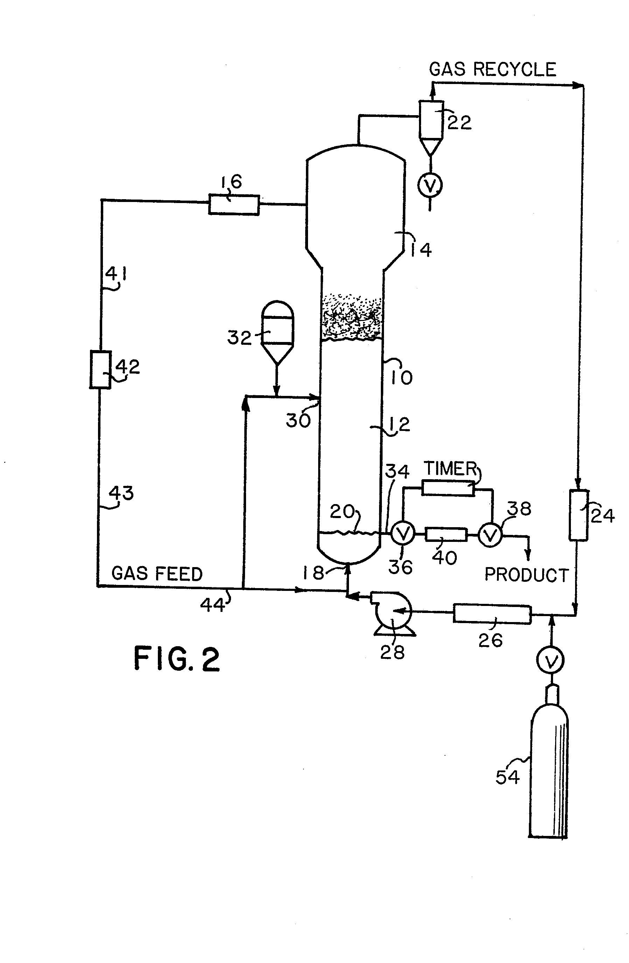

In the accompanying drawings Figure 1 shows a gas phase fluid
bed reactor employing a kill system according to one example of the
present invention, and Figure 2 shows a similar reactor employing a
kill system according to a further example.

Referring to Figure 1, the reactor 10 extends vertically and
consists of a lower reaction zone 12 and an upper velocity reduction
zone 14.  The reaction zone 12 may have a diameter to height ratio of
1:6 to 1:7.5 and the velocity reduction 14 may have a diameter to
height ratio of 1:1 to 1:2.

The reaction zone 12 comprises a bed of growing polymer
particles, formed polymer particles and a minor amount of catalyst
fluidized by the continuous flow of polymerizable and modifying
gaseous components in the form of make up feed and recycle gas through
the reaction zone.  To maintain a viable fluidized bed, mass gas flow
through the bed is above the minimum flow required for fluidization,
preferably from 2 to 6 times $G_{mf}$ and more preferably from 3 to about
5 $G_{mf}$. $G_{mf}$ is used in the accepted form as the abbreviation for the
minimum mass gas flow required to achieve fluidization, C. Y. Wen and
Y. H. Yu, "Mechanics of Fluidization", Chemical Engineering Progress
Symposium Series, Vol. 62, pp. 100-111 (1966).

It is important that the bed always contains particles to
prevent the formation of localized "hot spots" and to entrap and
distribute the powdery catalyst throughout the reaction zone.  On
start up, the reaction zone is usually charged with a base of
particulate polymer particles before gas flow is initiated.  The
particles may be identical in nature to the polymer to be formed or
different.  When different, they are withdrawn with the desired formed
polymer particles as the first product.  Eventually, a fluidized bed
of the desired particles supplants the start-up bed.

0136029

Catalyst concentration in the bed is substantially equal to the catalyst concentration in the product, namely 0.005 to 0.50 percent of bed volume depending on the productivity of the particular catalyst used.

The catalyst used in the fluidized bed is stored for service in a reservoir 32 under a nitrogen blanket.

Fluidization is achieved by a high rate of gas recycle to and through the bed, typically about 50 times the rate of feed of make up gas. The fluidized bed has the general appearance of a dense mass of viable particles in possibly free-vortex flow as created by the percolation of gas through the bed. Free flow of particles and therefore fluidization is substantiated by the fact that axial pressure drop through the bed is typically in the order of only about 1 psig (108 kPa).

Make-up gas is fed to the bed at a rate equal to the rate at which particulate polymer product is withdrawn. The composition of the make up gas is determined by a gas analyzer 16 positioned above the bed. The gas analyzer determines component deficiency in the gas being recycled and the composition of the make up gas is adjusted accordingly to maintain an essentially steady state gaseous composition within the reaction zone. The composition of the make up gas can be adjusted by signals sent from gas analyzer 16 via line 41 to the sources 42 of the components of the gas feed, from whence such components can be fed through line 43 to gas feed line 44.

To insure complete fluidization, the recycle gas and, where desired, part of the make up gas are returned to the reactor at point 18 below the bed. There exists a gas distribution plate 20 above the point of return to aid in fluidizing the bed.

The portion of the gas stream which does not react in the bed constitutes the recycle gas which is removed from the polymerization zone by passing it into the velocity reduction zone 14 above the bed where entrained particles are given an opportunity to drop back into the bed. Particle return may be aided by a cyclone 22 which may be part of the velocity reduction zone or exterior thereto. Where desired, the recycle gas may then be passed through a filter 24 designed to remove small particles at high gas flow rates to prevent dust from contacting heat transfer surfaces and compressor blades.

The recycle gas is then passed through a heat exchanger 26 wherein it is stripped of heat of reaction before it is returned to the bed. By constantly removing heat of reaction, no noticable temperature gradient appears to exist within the bed. In particular, it has been observed that the bed acts almost immediately to adjust the temperature of the bed thereby maintaining itself at an essentially constant temperature under steady state conditions. The recycle gas is then compressed in a compressor 28 and returned to the reactor at its base 18 and to the fluidized bed through a distribution plate 20.

The distribution plate 20 plays an important role in the operation of the reactor. The fluidized bed contains growing and formed particulate polymer particles as well as catalyst particles. As the polymer particles are hot and possibly active, they must be prevented from settling, for if a quiescent mass is allowed to exist, any active catalyst contained therein may continue to react and cause fusion. Diffusing recycle gas through the bed at a rate sufficient to maintain fluidization at the base of the bed is, therefore, important. The distribution plate 20 serves this purpose and may be a screen, slotted plate, perforated plate, a plate of the bubble cap type and the like. Whatever its design, it must diffuse the recycle gas through the particles at the base of the bed to keep them viable, and also serve to support a quiescent bed of resin particles when the reactor is not in operation.

In addition to a polymerizable olefin, hydrogen as a component of the gas stream is of significant utility in the vapor phase polymerization of olefins in the fluidized bed reactor. In general, the melt index of the product increases with an increase in the hydrogen concentration in the gas stream.

Also if desired for control in the system, any gas inert to the catalyst and reactants can be present.

It is important to operate at a temperature below the sintering point of the polymer particles. To insure that sintering will not occur, especially in the event of failure of compressor 28, operating temperatures considerably below the sintering temperature are desired. Such relatively low operating temperatures provide a safe margin for an increase in the temperature of the reactor bed in the interval between the time of the initiation of the kill system and the time of the contact of the kill gas with all the catalyst. U.S. Patent No. 4,003,712 states that for the production of homopolymers an operating temperature of from 90° to 100°C is preferred whereas an operating temperature of about 90°C or lower is preferred for copolymers. By means of the present kill system, the operating temperatures of the reactor may be safely increased, e.g., by at least 3°C, while still maintaining a sufficient margin below the sintering temperature to prevent sintering of the polymer particles in the event of failure of compressor 28.

U.S. Patent No. 4,003,712 further indicates that the fluid bed reactor system is capable of being operated at a pressure of from 40 to 300 psi (276 to 2069 kPa) with operation at intermediate and elevated pressures favoring heat transfer since an increase in pressure increases the unit volume heat capacity of the gas.

Catalyst is injected into the bed at a rate equal to its consumption at a point 30 which is above the distribution plate 20. Preferably, the catalyst is injected at a point 1/4 to 3/4 of the height of the bed. Injecting the catalyst at a point above the distribution plate is an important feature, since injection into the area below the distribution plate may cause polymerization to begin there and eventually cause plugging of the distribution plate. Injection into a viable bed instead aids in distributing the catalyst throughout the bed and tends to preclude the formation of localized spots of high catalyst concentration which may result in the formation of "hot spots."

All or part of the make up feed stream may be used to carry the catalyst into the bed. It is preferred to use only part of the make up feed stream as the carrier for the catalyst since at high productivities, the injection of a large amount of gas into the side of the bed may disrupt the characteristics of the bed and cause channeling or the like.  In the alternative, part of the recycle gas stream can be diverted for the purpose of carrying catalyst into the bed.

The productivity of the bed is determined by the nature of the catalyst employed and the rate of catalyst injection.  The productivity of the bed may be increased by simply increasing the rate of catalyst injection and decreased by reducing the rate of catalyst injection.

Since any change in the rate of catalyst injection will change the rate of generation of heat of reaction, the temperature of the recycle gas is adjusted upwards or downwards to accommodate the change in the rate of heat generation.  This insures the maintenance of an essentially constant temperature bed.  Complete instrumentation of both the fluidized bed and the recycle gas cooling system is, of course, necessary to detect any temperature change in the bed to enable the operator to make a suitable adjustment in the temperature of the recycle gas.

Under a given set of operating conditions, the fluidized bed is maintained at essentially a constant height by withdrawing a portion of the bed as product at a rate equal to the rate of formation of the particulate polymer product.  Since the rate of heat generation is directly related to product formation, a thermal analysis of the gas leaving the reactor is determinative of the rate of particulate polymer formation.

The particulate polymer product is preferably continuously withdrawn at a point 34 at or close to the dispersion plate 20 in suspension with a portion of the gas stream which is vented before the particles settle to preclude further polymerization and sintering when the particles reach their ultimate collection zone.  The suspending gas may also be used, as mentioned above, to drive the product of one reactor to another reactor.

The particulate polymer product is conveniently and preferably withdrawn through the sequential operation of a pair of timed valves 36 and 38 defining a segregation zone 40. While valve 38 is closed, valve 36 opens to emit a plug of gas and product to the zone 40 between it and valve 36 which then closes. Valve 38 thereafter opens to deliver the product to an external recovery zone and then it closes to wait the next sequence. The fluidized bed reactor is equipped with an adequate vent system to allow venting the bed during start up and shut down.

It will be apparent that the above-described fluid bed reactor system may be altered in a number of ways without changing the essential characteristics of the system. For example, as suggested in U.S. Patent No. 4,302,566, the positioning of the heat exchanger 26 and compressor 28, as depicted in the attached drawing, may be changed such that the heat exchanger 26 becomes placed downstream of the compressor 28 in the recycle system.

When a reactor kill is initiated in an emergency situation, a kill gas such as carbon monoxide gas is injected into the inlet chamber of the reactor. The kill gas contacts the polymerization catalyst in the bed and terminates the chemical reaction almost immediately or within approximately one minute. The time required for the kill (response time) is largely established by the time it takes to disperse the kill gas through the entire bed.

In an emergency situation with compressor flow suddenly lost, there is no gas flow through the reactor. The kill gas must be forced into the resin bed. Absent carrier gas, dispersal of the kill gas must be effected by means of a vent flow from the top of the reactor, which is achieved by closing the recycle valve 46 and opening the vent valve 48. The kill gas from a tank 54 is forced through the bed by expansion of gas from the inlet chamber (which contains the kill gas). The time required for the kill gas to reach the top of the bed is limited by the rate at which gas can be vented from the reactor.

With the present system, the existing vent flow is augmented by a flow of carrier gas from a tank 56 connector to the inlet chamber of the reactor.  The carrier gas may be provided by an external source
(e.g. higher pressure nitrogen cylinders).  With an external flow
attributable to injection of carrier gas, the kill gas is forced
upward through the bed much more rapidly.  More particularly, the rate
of penetration of kill gas into the bed may be increased by a factor
of at least two when a carrier gas is used.

        The kill system is actuated by opening valve 48, closing
valve 46 and opening a further valve connected between the tank 46 and
the reactor 10.  This system may be actuated manually or automatically
by automatic kill initiating means 52, which responds to sensing means
adapted to detect failure of the compressor 28.  The kill system may
also involve the manual or automatic discontinuance of the
introduction of catalyst and/or olefin reactant into the reactor.

        It is noted that when using a carrier gas such as nitrogen
which has a heat capacity less than the olefin reactant, the initial
rate of increase of the reactor bed temperature may be greater than
the increase observed with the same kill system in the absence of
carrier gas.  However, inspite of a more rapid initial increase in
reactor bed tempeature, the carrier gas enhanced kill system has been
observed to terminate the reaction faster and at a lower final
temperature of the catalyst bed as compared with the non-carrier
enhanced kill system.

        Referring to Figure 2, the reactor of the further example is
similar to that shown in Figure 1 and hence the same reference
numerals are used to identify like components.  However, in this
further example the carrier gas for dispersal of the kill gas is
provided by the natural "coast-down" flow of the recycle compressor
28.  Thus, after a loss of power, the compressor continues to spin
under its rotational inertia and so provides a gradually decreasing
flow of recycle gas.  The recycle flow may decrease as follows:

## TABLE I
### Compressor Coast-Down Flow

| Elapsed Time | Gas Flow |
|---|---|
| (sec.) | (percent of initial flow) |
| 0 | 100% |
| 0.8 | 81% |
| 2.13 | 61% |
| 4.78 | 40% |
| 12.5 | 20% |
| 90 | 13% |

The kill gas is injected from the supply tank 54 within a short time after the loss of power (10-30 seconds) with the recycle system open and the vent system closed. The coast-down flow can carry the kill gas through the bed in 40-50 seconds after injection. After the coast-down flow has dropped to a predetermined level, the coast-down flow augmented kill system may be deactivated by closing off the recycle system by a valve means and by venting gases from the top of the reactor while continuing to inject kill gas. This venting/kill gas injection technique corresponds to a conventional kill system.

Accordingly, the coast -down flow augmented kill system of this further example may be used as the sole kill system or it may be used in combination with other kill systems.

F-2411(2412)                      - 16 -

Claims:

1.    A method for terminating a gas phase catalytic olefin polymerization reaction, said method comprising the injection of an amount of kill gas into the reaction medium sufficient to terminate the reaction, wherein to increase the rate of penetration of kill gas into the reaction medium   a non-catalyst-poisoning carrier gas is injected into the reaction medium together with said kill gas.

2.    A method for terminating a gas phase catalytic olefin polymerization reaction in a fluid bed reactor system, said reactor system comprising a vertical reactor wherein said polymerization takes place and a fluidizing medium recycle means in fluid communication with said reactor and powered by a compressor, said method being actuated in the event of failure of said compressor and comprising the steps of:

   (i)    closing off said recycle means by closing one or more valves in said recycle means;

   (ii)   injecting an amount of carbon oxide gas sufficient to terminate said polymerization, said injection taking place adjacent the bottom of said reactor at a point below the polymer bed in said reactor;

   (iii)  venting gas from adjacent the top of the reactor at a point above said polymer bed; and

   (iv)   injecting a non-catalyst-poisoning carrier gas into the reactor adjacent the bottom of said reactor at a point below the polymer bed in said reactor.

3.    A method according to claim 1 or claim 2, wherein said carrier gas is selected from ethylene, argon, helium and nitrogen.

4.    A method according to claim 1 or claim 2, wherein kill gas is injected at a point upstream from the point of injection of said carrier gas.

5. A method according to claim 1 or claim 2, wherein the amount of said carrier gas comprises at least 90 mol percent of the total of kill gas and carrier gas.

6. A method for terminating a gas phase catalytic olefin polymerization reaction during a power failure, said olefin polymerization reaction taking place in a reactor having a gas recycle means equipped with a compressor capable of producing a coast-down flow of recycle gas for at least one minute during a power failure, said method comprising injecting an amount of kill gas into said recycle means sufficient to terminate the olefin polymerization reaction, whereby said kill gas is carried into the reaction medium by said coast-down flow of recycle gas during said power failure.

7. A method according to any preceding claim , wherein said reaction is carried out in a fluid bed or a stirred bed reactor.

8. A method according to any preceding claim , wherein said kill gas is selected from carbon oxides, oxygen and air.

9. A method according to any preceding claim and further comprising the steps of:
   (v) discontinuing the introduction of catalyst into said reactor; and
   (vi) discontinuing the introduction of olefin reactant into said reactor.

10. A fluid bed reactor system in which olefin monomers may be catalytically polymerized continuously in a fluid bed under gas medium fluidized conditions, comprising:
   a vertical reactor having a cylindrical lower section, an upper section having a cross section greater than that of said lower section, said lower section being adapted to house a polymerization zone in which the catalyzed polymerization reaction may be conducted under gas medium fluidized fluid bed conditions, and said upper section being adapted to function as a velocity reduction zone for the recovery of particles entrained in fluidizing medium entering said upper section from said lower section, and fluidizing medium permeable distribution plate means within and towards the base of said lower section, said distribution plate means being adapted to diffuse fluidizing medium up through the fluidized bed in said lower section and to support said bed thereon when said bed is quiescent;

fluidizing medium supply means in gas communication with, and adapted to supply fluidizing medium and make up gas to, the lower section of said reactor and below said distribution plate means;

catalyst injection means in communication with, and adapted to supply particulate olefin polymerization catalyst to, the polymerization zone in said lower section;

polymer product recovery means in polymer communication with, and adapted to recover polymer product from, the base of said polymerization zone and above said distribution plate means;

fluidizing medium recycle means in communication with said reactor and adapted to recover fluidizing medium from the upper section of said reactor and to recycle the thus recovered fluidizing medium to the lower section of said reactor at a point below said distribution plate means, said fluidizing medium recycle line means being powered by a compressor;

heat exchange means within said recycle means adapted to remove heat of reaction from the recycled fluidizing medium;

gas analyzer means in communication with said velocity reduction zone and adapted to analyze gas component deficiency in the fluidizing medium in said velocity reduction zone;

said fluidizing medium supply means being in communication with said recycle means and said gas analyzer means and being adapted to supply deficient components of the fluidizing medium to said recycle means in response to an activation signal from said gas analyzer means;

valve means capable of closing off said fluidizing medium recycle means when said compressor is not operating;

injection means capable of injecting carbon oxide into said reactor below said distribution plate means;

venting means for venting gas from the top of said reactor;

carrier gas injection means capable of injecting nitrogen into said reactor below said distribution plate means; and

automatic reaction kill initiating means comprising a compressor failure sensing means in operative connection with said valve means, carbon oxide injection means, said venting means and said carrier gas injection means, said kill initiating means being capable of sensing failure of said compressor and automatically actuating said valve means, said carbon oxide injection means, said venting means and said nitrogen carrier gas means, whereby said fluidizing medium recycle means is closed off, gas is vented from the top of said reactor, and carbon oxide carried by said nitrogen carrier gas is passed through said bed.

4145H/0218H

FIG. 1

FIG. 2